Europäisches Patentamt

European Patent Office

Office européen des brevets

Publication number: **0 283 112**
**A2**

# EUROPEAN PATENT APPLICATION

Application number: 88300471.5

Int. Cl.4: **C04B 35/58**

Date of filing: **20.01.88**

Priority: **20.01.87 US 5476**

Date of publication of application:
**21.09.88 Bulletin 88/38**

Designated Contracting States:
**DE FR GB IT NL SE**

Applicant: **KERAMONT ADVANCED CERAMIC PRODUCTS CORPORATION**
**4233 S. Fremont Avenue**
**Tucson Arizona 85714(US)**

Inventor: **Mallia Robert A.**
**4751 W. Placita Del Suerte**
**Tucson, Arizona 85745(US)**
Inventor: **Loutfy Raouf O.**
**4660 N. Via Madre**
**Tucson Arizona 85749(US)**
Inventor: **Sepulveda, Juan L.**
**7735 E. Knollwood Terrace**
**Tucson, Arizona 85715(US)**

Representative: **Whalley, Kevin et al**
**MARKS & CLERK 57/60 Lincoln's Inn Fields**
**London WC2A 3LS(GB)**

**Process for preparing aluminium nitride powder, and aluminium nitride bodies obtained therefrom.**

Processes for preparing a ceramic powder giving high density and high strength green bodies, comprising mixing ceramic powders having specific defined median particle size $d_{50}$ distributions to obtain a mixture of powders and homogenizing the mixture of powders by milling followed by screening.

EP 0 283 112 A2

# "PROCESS FOR PREPARING ALUMINIUM NITRIDE POWDER, AND ALUMINIUM NITRIDE BODIES OBTAINED THEREFROM"

This invention relates to a process for preparing aluminium nitride powder, and ceramic aluminium nitride bodies obtained therefrom having high green density, high green strength and high thermal conductivity.

More particularly this invention relates to a process for preparing aluminium nitride powders starting from a mixture of powders having different size distributions, from which may be obtained compact bodies having high green density and high green strength and sintered bodies having high thermal conductivity, high fired density and high fired strength.

In recent years the semiconductor industry has made remarkable progress. The materials for circuit constituents, such as semiconductor chips, have become very important and are required to possess different combinations of properties such as high thermal conductivity, high mechanical strength, low dielectric constant, good wettability by metal and corrosion resistance.

Conventional powder technology for production of pressed parts has not paid much attention to the particle size distribution of the powder used. Although there have been attempts by some investigators to select particle size to improve density, results have not been sufficiently satisfactory. For example, some researchers have used very narrow size distributions (monosized) and have studied the effect of changing the mean particle size distribution in an attempt to determine the best one. See for example:

Culbertson, G.C., and Mathers, J.P., "The Effect of Particle Size and State of Aggregation on the Sintering of Aluminium Nitride", Metallurgical Society/AIME, Fall Meeting, October, 1981.

J. E. Funk, Jr., D.R. Dinger, and J.E. Funk, Sr., "Preparation of a Highly Loaded Coal Water Mixture: Co-Al, "Fourth International Symposium on Coal Slurry Combustion, Orlando, Florida, May 10-12, 1982.

M. Yamura et al., "Studies on Additives for CWS," Fourth International Symposium on Coal Slurry Combustion, Orlando, Florida, May 10-12, 1982.

It is well known, however, that the use of monosize material does not result in the best packing conditions and consequently this approach will not produce much improvement in the density of the pressed parts.

In order to obtain the best performances and characteristics of the sintered bodies, in addition to the particle size distribution, the purity of the starting ceramic powder is particularly important.

Various methods are known in the art for preparing AIN powders leading to sintered bodies having the best combination of the above-indicated properties.

In US Patent No. US-A-3,108,887 is described a method consisting of reacting aluminium with nitrogen to obtain AIN powders having good characteristics.

It is pointed out that in order to obtain a good sintered ceramic body it is necessary to use an AIN powder subjected to a prolonged ball milling.

Milling is continued preferably until the bulk of the AIN has a size below 5 microns, and the diameters of the AIN particles are kept in a strictly defined range.

Sintered bodies obtained by this method have a low thermal conductivity and moreover low green strength and consequently low fired strength.

In British patent specificiation no. GB-A-2,127,390 is described a method of obtaining sintered bodies having an improved thermal conductivity; said method comprises reacting $Al_2O_3$ with $N_2$ in the presence of reducing agents. According to this prior specification the Al metal impurities are kept at a very low level. This method nevertheless does not result in a combination of satisfactory characteristics.

It has been surprisingly found that the values of green density and green strength of compacted bodies obtained from a mixture of ceramic powders having an optimal size distribution are better than the expected values, calculated on a theoretical linear relationship for said mixed powders.

The present invention provides a process for preparing a ceramic powder giving high density and high strength green bodies, comprising:

a) mixing a first ceramic powder having a median or average particle size $d_{50}$ of from 3 to 5 microns in an amount from about 25 to 35% by weight; a second ceramic powder having a median particle size $d_{50}$ of from 1.5 to 2.5 microns in an amount from about 35 to 45% by weight; and a third ceramic powder having a median particle size $d_{50}$ of from 0.3 to 1.2 microns in an amount from about 20 to 40% by weight, to obtain a mixture of powders; and

b) homoenizing the mixed powders.

The mixture of powders obtained in the step a) may be subjected to the further steps of:

b) milling the said mixture under such working conditions as to obtain a milled mixture suitable to be screened with at least a 30 mesh screen; and

c) screening the said milled mixture.

The mixture obtained in step a) may be milled until the tap density is at least 1.0 g/cc; and the milled mixture may be screened using a screen ranging from 1/8 mesh to 200 mesh.

In one embodiment of the process of the invention, two powders are mixed, a first ceramic powder having a median particle size $d_{50}$ of from 0.3 to 1.2 microns in an amount from about 60 to 70% by weight is mixed with a second ceramic powder having a median particle size $d_{50}$ of from 3 to 5 microns in an amount from about 30 to 40% by weight, and the mixed powders are then homogenized. The further steps according to the invention are suitably carried out.

In another embodiment of the process of the invention, a ceramic powder having a median particle size $d_{50}$ from 0.5 to 0.6 microns (preferred ranges) in an amount from about 62 to 68% by weight is mixed with a ceramic powder having a median particle size of from 4 to 5 microns in an amount from about 32 to 38% by weight, and then the mixture of powders is homogenized.

According to a preferred embodiment of the present method, prior to mixing the starting ceramic powders, the powders are milled and screened (classified) to obtain the specified median particle sizes ($d_{50}$). The milling and screening steps are described in a copending application filed concurrently herewith, claiming priority from US patent application no. 004951.

The median particle size $d_{50}$ is calculated according to "Particle Size Measurements" by Terence Allen, London, Chapman and Hall, published in 1979, pages 79-111.

It is preferable to mill and screen each powder before the mixing step in order to obtain the best combination of properties between green density and green strength. There is described below how the effect of milling and screening is important for the properties of the single powder.

1) A portion of the above said AlN powder was mixed with yttria as a sintering aid and with glycerol trioleate as a grinding agent and pressed at 10,000 and 30,000 psi respectively without further treatment.

2) A second portion of the powder containing the same additives was milled in a ball mill of 20 l capacity, containing 15 Kg of high purity alumina balls as grinding media. The milling was carried out for 3 hours and pressed as in 1) above.

3) A third portion of the powder containing the same additives was treated according to the invention, that is: milling as in 2) above, and subsequently screening using a 35 mesh screen. The screened powder was pressed in a 1.2 inch diameter steel die previously sprayed with silicone for an easy release of the pressed sprill from the die. The pressing was carried out at 10,000 and 30,000 psi, respectively.

The powders as treated above were chemically analysed and the corresponding sprills were measured for green density as calculated from the dimensions and the weight and green strength test using ASTM procedure No.B-312-69.

## TABLE 1

## CHEMICAL ANALYSIS OF THE POWDERS

| Component (% by weight) | AlN commercial powder | AlN milled powder | AlN milled and screened powder |
|---|---|---|---|
| AlN | 87.80 | 92.17 | 94.59 |
| $Al_2O_3$ | 4.21 | 6.10 | 4.0 |
| Al metal | 4.17 | 1.45 | 0.01 |

* * * * * * * *

## TABLE 1A

## MECHANICAL PROPERTIES

| | Green density (g/cc) | | Green Strength (lbs.) | | Fired Density (g/cc) | |
|---|---|---|---|---|---|---|
| | 10,000 psi | 30,000 psi | 10,000 psi | 30,000 psi | 10,000 psi | 30,000 psi |
| Sprill 1.) | 1.721 | 1.866 | 22.16 | 13.16 | 2.719 | — |
| Sprill 2.) | 1.835 | 1.918 | 8.14 | 5.68 | 3.191 | 3.167 |
| Sprill 3) | 1.822 | 1.962 | 13.87 | 16.00 | 3.246 | 3.215 |

* * * * * * * * *

Sprill 1 means the green body obtained by using the powder as received, sprill 2 means that there is used the milled powder and sprill 3 the milled plus screened powder.

As is apparent from Table IA this treatment affords the best combination of green density, green strength and fired density.

Another way of carrying out the invention is mixing commercially available powders, or prepared by different or similar methods, milling the mixture and then screening until the desired median particle size $d_{50}$ distribution is obtained.

Any ceramic powder may be used for the process of the present invention; but preferably AlN, BN, $Al_2O_3$ and WC are used. Among the ceramic powders, AlN powder is particularly preferred.

Any commercial AlN powder or AlN prepared by different or similar processes can be used in the process of the present invention.

Processess for obtaining the AlN powder are disclosed in the aforementioned patents.

It is preferred to use an AlN powder having an average particle size from about 0.5 or 0.6 microns to 5 microns, and an $Al_2O_3$ + Al metal content of not greater than 10% by weight, the $Al_2O_3$ content not exceeding 5% (calculated as Al) when Al metal is absent, and a content of other impurities not exceeding 4% by weight (calculated as elements).

A preferred embodiment of the present invention comprises mixing an aluminium nitride powder having an average particle size of 1.11 microns in amount of 20% by weight, an aluminium nitride powder having an average particle size of 2.05 microns in an amount of 45% by weight and an aluminium nitride powder having an average particle size of 4.30 microns in an amount of 35% by weight.

The present invention also provides a ceramic powder prepared according to the process described above.

By using the ceramic powder obtained with the process of the present invention, compacts having improved green densities and green strength may be obtained.

The present invention further provides a ceramic body prepared with the ceramic powders described above.

The process of the present invention affords an optimum combination of green density and green strength.

The green density is a very important characteristic in view of the high fired density of the final sintered

4

body. The value of the green density increases because of the homogenization of the particles during the milling, while the green strength strongly decreases because of the milling, so that the characteristics of mechanical strength of the fired body are compromised. When screening is carried out after the milling, the green density maintains high values whereas the green strength reaches high values (increases).

Owing to the high values of green density and consequently of the fired density, the sintered bodies obtained according to the invention also show good values of the thermal conductivity.

The thermal conductivity is calculated by using the following formula:

$\lambda = \alpha.CP.d.100$, in which Cp is the specific heat, d is the density, and $\alpha$ is the thermal diffusity.

The change of green density and green strength because of the milling and screening steps are described in a copending application concurrently filed herewith as indicated above.

The surprising aspect of the present invention is that the compact bodies obtained from the mixture of powders having the characteristics described above show better green density and green strength values as compared with the expected values calculated by a weighted average.

Theoretical green density and green strength values for the mixed powders are calculated by averaging the corresponding values obtained from the single powders.

The milling step can be carried out in the presence of sintering aids and/or grinding aids.

As sintering aids, any sintering aid known in the art can be used, for example oxides or fluorides of metals selected from the group of yttrium, the rare earth metals (lanthanum, cerium, praseodymium, neodymium, samarium, gadolinium, dysprosium, etc.), and the alkaline earth metals (Ca, Sr, Ba), and preferably $Y_2O_3$, $YF_3$, $CaF_2$. These sintering aids are described, for example, in European patent application nos. EP-A-153,737 and EP-A-166,073 and in US patent no. US-A-3,108,887.

As grinding aids, there can be used any type of grinding aid known in the art, preferably glycerol trioleate.

The milling can be carried out according to the dry or wet method, under such working conditions as to obtain a milled powder suitable to be screened with at least a 30 mesh screen. In general the grinding requires some hours, about 3-4 hours.

For screening, it is important to use the maximum mesh value screen which permits carrying out the screening of the product. Generally, mesh values between 30 and 280 are suitable.

Dry ceramic powders often blind (block) the screen, and thus a large screen (mesh size) is required. Wet milled Al powder allows the use of a screen having a higher mesh value. This is also described in the copending application concurrently filed herewith as indicated above.

The invention will be further described with reference to the following illustrative examples.

## Example 1

A mixture of AlN powders was obtained as follows:

600 g of aluminium nitride powder A (sold by Stark Industries) have a particle size $d_{50}$ of 1.1 microns and a surface area of 6.0 $m^2/g$(20% by weight), 1350 g of aluminium nitride powder B (sold by Denka) having a particle size $d_{50}$ of 2.05 microns and a surface area of 4.0 $m^2/g$ (45% by weight), 280 g of aluminium nitride powder C (sold by Toshiba) having a particle size $d_{50}$ of 4.30 microns and a surface area of 1.0 $m^2/g$ (35% by weight). Each of these powders was obtained by milling and screening (classification) of the commercially available powder. This step is performed in accordance with the examples set forth in the previously mentioned copending application filed concurrently herewith. The mixture was mixed with 51.5 g of $Y_2O_3$ - (sintering aid) and 25.8 g of glycerol trioleate (grinding aid). The mixture was then charged into a 20 liter jar containing 15 Kg of high purity alumina grinding media (50% alumina balls having a 1/2" diameter and 50% having a 3/16" diameter), for homogenization, which was carried out for 3 hours.

Then the powder was screened using a 35 mesh screen to remove large agglomerates.

The screened powder was then placed in a 1.2" diameter steel die which was sprayed with silicone for easy release of the sprill from the die. The powder was pressed at 10,000 psi and 30,000 psi and two sprills (1/2" diameter by about 0.25" height) were produced. The green and fired densities of the sprills were calculated from the dimensions and weight of the sprills, according to Astor C-373-72; the green strength was measured using ASTM procedure number B-312-69.

The sprills were fired to 1850°C and maintained at this temperature for 2 hours. The fired density was calculated from the dimensions and weight of the sprills. The green density, green strength, and fired density are reported in Table 1.

## Table 1
### Green density, green strength and fired density of mixed powders

|            | g.d.(g/cc) | f.d.(g/cc) | g.st.(lbs) |
|------------|-----------|-----------|-----------|
| 10,000 psi | 2.021     | 3.121     | 6.44      |
|            | (1.994)   | (2.947)   | (4.31)    |
| 30,000 psi | 2.136     | 3.054     | 2.02      |
|            | (2.079)   | (2.922)   | (1.30)    |

The values reported in brackets were calculated as a linear relationship considering the amounts in weight percent of the mixed powder and the experimental density and strength of values obtained by subjecting the single AlN powders to the same treatments described above. The values of the single AlN powders are reported in Table 2 and Table 3.

The values reported in brackets were calculated as a linear relationship considering the amounts in weight percent of the mixed powder and the experimental density and strength of values obtained by subjecting the single AlN powders to the same treatments described above. The values of the single AlN powders are reported in Table 2 and Table 3.

The higher fired density obtained by combining powders compared to the calculated value should also result in increased thermal conductivity.

## Table 2
### Green density and fired density of single AlN powders.

| Powder | Green Density (g/cc) | | Fired density (g/cc) | |
|--------|------------|------------|------------|------------|
|        | 10,000 psi | 30,000 psi | 10,000 psi | 30,000 psi |
| A      | 1.822      | 1.962      | 3.191      | 3.162      |
| B      | 1.987      | 2.082      | 2.868      | 2.91       |
| C      | 2.102      | 2.141      | 2.839      | 2.868      |

## Table 3
### Green strength of single AlN powders.

| Powder | Green strength (lbs.) | |
|--------|------------|------------|
|        | 10,000 psi | 30,000 psi |
| A      | 13.87      | 16.00      |
| B      | 2.20       | 2.22       |
| C      | 1.56       | 0.81       |

It is clear therefore that the combination of powders enhances the green density, green strength and fired density above those values that are expected by linear addition of properties.

## Example 2

Powders A and C pretreated (milled and screened) as indicated in Example 1 were used in the following amounts:

1950 g of the aluminium nitride A of example 1 (65% by weight) and 1050 g of the aluminium nitride C of Example 1 (35% by weight). The powders were then used with the sintering aid and the grinding aid used in Example 1 and subsequently treated as in Example 1.

The results obtained are reported in Table 4.

### Table 4
#### Green density, green strength, fired density and fired strength of mixed powders A and C.

|  | g.d.(g/cc) | g.st.(lbs) | f.d.(g/cc) |
|---|---|---|---|
| 10,000 psi | 1.981 | 7.48 | 3.098 |
|  | (1.92) | (5.69) | (3.068) |
| 30,000 psi | 2.078 | 4.46 | 3.130 |
|  | (2.025) | (4.31) | (3.062) |

The values reported in brackets were calculated as in Example 1.

## Example 3

750 gm of the aluminium nitride powder A of Example 1 (25% by weight) and 2250 g of the aluminium nitride B of Example 1 (75% by weight) were used with the sintering aid and grinding aid and subsequently treated as in Example 1. The results obtained are reported in Table 5.

### Table 5
#### Green density and fired density of mixed powders A and B

|  | g.d.(g/cc) | f.d.(g/cc) |
|---|---|---|
| 10,000 psi | 1.989 | 3.134 |
|  | (1.946) | (2.949) |
| 30,000 psi | 2.000 | 3.177 |
|  | (2.052) | (2.974) |

## Claims

1. A process for preparing an aluminium nitride powder, characterized by comprising the steps of:

(a) mixing a first AlN powder having a median particle size $d_{50}$ of from 3-5 microns, in an amount from about 25 to 35% by weight; a second AlN powder having a median particle size $d_{50}$ of from 1.5 to 2.5 microns in an amount from about 35 to 45% by weight; and a third AlN powder having a median particle size $d_{50}$ of from 0.3-1.2 microns in an amount from about 20 or 30 to 40% by weight, to obtain a mixture of powders;

(b) milling the said mixture under such working conditions as to obtain a milled mixture suitable to be screened with a least a 30 mesh screen; and

(c) screening the said milled mixture.

7

2. A process as claimed in claim 1. characterised by further comprising a milling plus screening step for each of the three AlN powders before the step (a).

3. A process as claimed in claim 1 or 2, characterised in that the mesh value of the screen used in the step (c) is from 30 to 280.

4. An aluminium nitride body obtained from an aluminium nitride powder prepared according to the process of any of claims 1 to 3.

5. A process for preparing an aluminium nitride powder, characterised by comprising the steps of:

(a) mixing a first AlN powder having a median particle size $d_{50}$ of from 0.3-1.2 microns in an amount from about 60 to 70% by weight with a second AlN powder having a median particle size $d_{50}$ of from 3-5 microns in an amount from about 30 to 40% by weight, to obtain a mixture of said powders:

(b) milling the said mixture under such working conditions as to obtain a milled mixture suitable to be screened with at least a 30 mesh screen: and (c) screening the said milled mixture.

6. A process as claimed in claim 5, characterised by further comprising a milling plus screening step for each of the two AlN powders before the step (a).

7. An aluminium nitride body obtained from an aluminium nitride powder prepared according to the process of claim 5 or 6.